# EUROPÄISCHE PATENTANMELDUNG

(11) **EP 4 834 718 A1**
(43) Veröffentlichungstag der Anmeldung: **04.11.2026**
(21) Anmeldenummer: 26172876.0
(22) Anmeldetag: 16.04.2026
(51) Int. Cl.: B62D 15/02, B62D 5/04

(54) **STEER-BY-WIRE-LENKSYSTEM UND VERFAHREN ZUM BETREIBEN EINES STEER-BY-WIRE-LENKSYSTEMS**

(30) Priorität: 30.04.2025 DE 102025116833
(71) Anmelder: Volkswagen Aktiengesellschaft, 38440 Wolfsburg (DE)
(72) Erfinder: Blodkamp, Thomas, 38440 Wolfsburg (DE); Reinbold, Felix, 38440 Wolfsburg (DE); Atzert, Benjamin, 38440 Wolfsburg (DE)

(57) **Zusammenfassung**

Die Erfindung betrifft ein Steer-by-Wire-Lenksystem (1), umfassend ein achsparalleles Lenkgetriebe (9), eine elektrische Maschine (8), die eingerichtet ist zum Stellen einer Zahnstangen- oder Hubstangenposition (x) über das achsparallele Lenkgetriebe (9), einen ersten Sensor (10), der eingerichtet ist zum Erfassen der Zahnstangen- oder Hubstangenposition (x1) über einen gesamten Lenkungshub, einen zweiten Sensor (11), der eingerichtet ist zum Erfassen einer Rotorlage (phi) eines Rotors (12) der elektrischen Maschine (8), und eine Steuereinrichtung (4), wobei die Steuereinrichtung (4) dazu eingerichtet ist, basierend auf der von dem zweiten Sensor (11) bereitgestellten Rotorlage (phi) einen virtuellen Umdrehungszähler (14) für den Rotor (12) bereitzustellen und in einem normalen Betriebszustand (100) eine Zahnstangen- oder Hubstangenposition (x2) basierend auf der bereitgestellten Rotorlage (phi) und einem Wert (U) des virtuellen Umdrehungszählers (14) und einer Transformationsvorschrift (T) zu bestimmen. Ferner betrifft die Erfindung ein Verfahren zum Betreiben eines Steer-by-Wire-Lenksystems (1).

## Beschreibung

Die Erfindung betrifft ein Steer-by-Wire-Lenksystem und ein Verfahren zum Betreiben eines Steer-by-Wire-Lenksystems.

Bei klassischen Lenksystemen mit mechanischem Durchgriff vom Lenkrad wird über einen Winkelsensor am Lenkrad oder eine Drehmomentmesseinheit ein Abgleich mit einem Motorlagesensor an einer zum Bereitstellen eines Unterstützungsmoments vorgesehenen elektrischen Maschine geschaffen und bei jedem Aufstarten einer Steuereinrichtung des Lenksystems ein Abgleich mit diesem Referenzsensor geschaffen, um eine Zahnstangenposition bestimmen zu können.

Der Umstieg auf Steer-by-Wire-Lenksysteme geht mit einer mechanischen Entkopplung zu dem Winkelsensor oder der Drehmomentmesseinheit oder mit deren Entfall einher. Hierdurch entfällt die Referenz zur Bestimmung einer absoluten Zahnstangenposition.

Die DE 10 2023 200 939 A1 beschreibt ein Verfahren zur Bestimmung der aktuellen Position einer Zahnstange eines Steer-by-Wire Lenksystems eines Kraftfahrzeugs, aufweisend die Schritte eines Erfassens von Daten zur Bestimmung einer initialen Position der Zahnstange des Steer-by-Wire Lenksystems mittels eines ersten Sensors, eines Erfassens von Daten zur Bestimmung einer initialen Position der Zahnstange des Steer-by-Wire Lenksystems mittels eines zweiten Sensors, der in Form eines Motorpositionssensors eines Lenkmotors ausgebildet ist, eines Bestimmens der initialen Position der Zahnstange des Steer-by-Wire Lenksystems auf Basis der von dem ersten Sensor und der von dem zweiten Sensor erfassten Daten mittels einer Verarbeitungseinheit sowie eines Bestimmens der aktuellen Position der Zahnstange des Steer-by-Wire Lenksystems auf Basis der initialen Position der Zahnstange mittels der Verarbeitungseinheit.

Die DE 10 2021 212 470 A1 beschreibt eine Steer-by-Wire-Lenkung für ein Kraftfahrzeug. Die Steer-by-Wire-Lenkung umfasst eine Zahnstange, einen Elektromotor, ein Getriebe zur Übersetzung einer Drehbewegung des Elektromotors in eine Translationsbewegung der Zahnstange, und eine erste Sensoreinrichtung, die an dem Elektromotor angeordnet und dazu konfiguriert ist, die Drehwinkellage eines Rotors des Elektromotors zu erfassen, wobei zusätzlich eine Funktion zur Zählung der Umdrehungen des Rotors vorgesehen ist. Das Getriebe weist eine Getriebestufe mit einem ganzzahligen Untersetzungsverhältnis auf. Ein Getriebeeingangsglied der Getriebestufe dreht mit der Drehzahl des Rotors. Eine zweite Sensoreinrichtung ist an einem Getriebeausgangsglied besagter Getriebestufe angeordnet, welche nach einem Sensorprinzip arbeitet, das ohne Zusatzenergie in der Lage ist, aus einer Relativbewegung ein Signal zu generieren. Die zweite Sensoreinrichtung weist Indexmarken in einer dem Untersetzungsverhältnis entsprechenden Anzahl, welche in Umfangsrichtung an dem Getriebeausgangsglied gleichbeabstandet voneinander angeordnet sind, sowie mindestens eine stationär angeordnete Sensiereinheit zum Erfassen des Passierens einer Indexmarke auf.

Der Erfindung liegt die Aufgabe zu Grunde, ein Steer-by-Wire-Lenksystem und ein Verfahren zum Betreiben eines Steer-by-Wire-Lenksystems, insbesondere in Bezug auf die eingangs genannte Problematik, zu verbessern.

Die Aufgabe wird erfindungsgemäß durch ein Steer-by-Wire-Lenksystem mit den Merkmalen des Patentanspruchs 1 und ein Verfahren mit den Merkmalen des Patentanspruchs 9 gelöst. Vorteilhafte Ausgestaltungen der Erfindung ergeben sich aus den Unteransprüchen.

Insbesondere wird ein Steer-by-Wire-Lenksystem geschaffen, umfassend ein achsparalleles Lenkgetriebe, eine elektrische Maschine, die eingerichtet ist zum Stellen einer Zahnstangen- oder Hubstangenposition über das achsparallele Lenkgetriebe, einen ersten Sensor, der eingerichtet ist zum Erfassen der Zahnstangen- oder Hubstangenposition über einen gesamten Lenkungshub, einen zweiten Sensor, der eingerichtet ist zum Erfassen einer Rotorlage eines Rotors der elektrischen Maschine, und eine Steuereinrichtung, wobei die Steuereinrichtung dazu eingerichtet ist, basierend auf der von dem zweiten Sensor bereitgestellten Rotorlage einen virtuellen Umdrehungszähler für den Rotor bereitzustellen und in einem normalen Betriebszustand eine Zahnstangen- oder Hubstangenposition basierend auf der bereitgestellten Rotorlage und einem Wert des virtuellen Umdrehungszählers und einer Transformationsvorschrift zu bestimmen.

Ferner wird insbesondere ein Verfahren zum Betreiben eines Steer-by-Wire-Lenksystems zur Verfügung gestellt, wobei eine Zahnstangen- oder Hubstangenposition über ein achsparalleles Lenkgetriebe mittels einer elektrischen Maschine gestellt wird, wobei die Zahnstangen- oder Hubstangenposition mittels eines ersten Sensors über einen gesamten Lenkungshub erfasst wird, wobei eine Rotorlage eines Rotors der elektrischen Maschine mittels eines zweiten Sensors erfasst wird, wobei basierend auf der von dem zweiten Sensor erfassten Rotorlage ein virtueller Umdrehungszähler für den Rotor bereitgestellt wird, und wobei eine Zahnstangen- oder Hubstangenposition in einem normalen Betriebszustand basierend auf der erfassten Rotorlage und einem Wert des virtuellen Umdrehungszählers und einer Transformationsvorschrift bestimmt wird.

Das Steer-by-Wire-Lenksystem und das Verfahren ermöglichen es, eine Zahnstangen- oder Hubstangenposition verbessert zu bestimmen. Eine Zahnstangen- oder Hubstangenposition wird hierbei über ein achsparalleles Lenkgetriebe mittels einer elektrischen Maschine gestellt. Es sind zwei Sensoren vorgesehen: Mittels eines ersten Sensors wird die Zahnstangen- oder Hubstangenposition über einen gesamten Lenkungshub erfasst. Mittels eines zweiten Sensors wird eine Rotorlage eines Rotors der elektrischen Maschine erfasst. Eine Steuereinrichtung des Steer-by-Wire-Lenksystems ist dazu eingerichtet, basierend auf der von dem zweiten Sensor bereitgestellten Rotorlage einen virtuellen Umdrehungszähler für den Rotor bereitzustellen. Der virtuelle Umdrehungszähler erhöht bei Erreichen eines vollen Umlaufs (beispielsweise >360°, >720°, >1080°, ...) in einer Richtung den Umdrehungszähler und verringert den Umdrehungszähler bei Erreichen eines vollen Umlaufs (beispielsweise <360°, <720°, <1080°, ...) in die andere Richtung. Der Umdrehungszähler wird hierbei virtuell, das heißt insbesondere ausschließlich auf logischer Ebene, mittels der Steuereinrichtung bereitgestellt und betrieben. In einem normalen Betriebszustand wird eine Zahnstangen- oder Hubstangenposition mittels der Steuereinrichtung basierend auf der bereitgestellten Rotorlage und einem Wert des virtuellen Umdrehungszählers und einer Transformationsvorschrift bestimmt. Ferner lässt sich insbesondere auch eine geometrische Mittenlage des Steer-by-Wire-Lenksystems ausgehend hiervon bestimmen. Insbesondere wird die elektrische Maschine mittels der Steuereinrichtung basierend auf der bestimmten Zahnstangen- oder Hubstangenposition gesteuert und/oder geregelt. Dies umfasst insbesondere das Bereitstellen eines Motormoments zum Stellen einer Soll-Zahnstangen- oder Soll-Hubstangenposition zum Umsetzen einer an einem Lenkrad des Steer-by-Wire-Lenksystems erfassten Lenkvorgabe.

Ein Vorteil des Steer-by-Wire-Lenksystems und des Verfahrens ist, dass Kosten eingespart werden können und dennoch zu jeder Zeit eine Zahnstangen- oder Hubstangenposition bereitgestellt werden kann. Der im normalen Betriebszustand verwendete zweite Sensor kann hierbei kostengünstig bereitgestellt werden, da dieser nur die Rotorlage erfassen muss, diese jedoch insbesondere mit größerer Genauigkeit bzw. Auflösung erfassen und bereitstellen kann. Der Umdrehungszähler wird nur virtuell bereitgestellt. Nach einer Spannungsunterbrechung und einem Verlust eines Wertes des virtuellen Umdrehungszählers kann die Zahnstangen- oder Hubstangenposition in jedem Fall mittels des ersten Sensors erfasst und bereitgestellt werden.

Das Steer-by-Wire-Lenksystem ist ansonsten in an sich bekannter Weise ausgebildet. Insbesondere umfasst das Steer-by-Wire-Lenksystem ein Lenkmodul (engl. road wheel actor, RWA) und ein Lenkradmodul (engl. force feedback actuator, FFA) und eine die Module verbindende Kommunikationsverbindung.

Im Rahmen des in dieser Offenbarung beschriebenen Verfahrens und der Vorrichtung sollen die Begriffe Zahnstange, Hubstange und Schubstange insbesondere äquivalent zueinander sein, denn für das Verfahren und die Vorrichtung spielt die konkrete Ausführung des Steer-by-Wire-Lenksystems mit einer Zahnstange, Hubstange oder Schubstange keine Rolle. Das gleiche gilt für die Begriffe Zahnstangenposition, Hubstangenposition und Schubstangenposition.

Der erste Sensor kann insbesondere zu jeder Zeit eine (absolute) Zahnstangenposition bereitstellen. Der erste Sensor erfasst hierzu insbesondere unmittelbar oder mittelbar eine Zahnstangenposition über den gesamten Lenkungshub hinweg, das heißt, von einem Endanschlag bis zum anderen Endanschlag. Der erste Sensor kann die Zahnstangenposition beispielsweise in Form einer Lenkgetriebeposition (z.B. in Form eines Winkels zwischen 0 und 360°) oder in anderer Weise kodieren und bereitstellen. Insbesondere ist der erste Sensor aufstartfähig, das heißt, nach einer Spannungsunterbrechung kann die (absolute) Zahnstangenposition erfasst und bereitgestellt werden. Der erste Sensor weist gegenüber dem zweiten Sensor jedoch insbesondere eine geringere Genauigkeit bzw. Auflösung beim Erfassen der Zahnstangenposition auf.

Der zweite Sensor kann insbesondere zu jeder Zeit eine Rotorlage (Drehwinkellage des Rotors) der elektrischen Maschine erfassen. Der zweite Sensor erfasst insbesondere ausschließlich die Rotorlage, ohne hierbei selbst ausgebildet zu sein, eine Anzahl von Umdrehungen des Rotors zu erfassen oder zu bestimmen. Hierdurch kann der zweite Sensor insbesondere kostengünstig bereitgestellt werden. Zusammen mit dem virtuellen Umdrehungszähler ist es mittels des zweiten Sensors jedoch insbesondere möglich, die Zahnstangen- oder Hubstangenposition mit einer größeren Genauigkeit bzw. Auflösung zu bestimmen als mittels des ersten Sensors. Dies ist vorteilhaft beim Stellen der Soll-Zahnstangenposition oder Soll-Hubstangenposition. Der zweite Sensor ist in Bezug auf die Rotorlage ebenfalls aufstartfähig, das heißt, nach einer Spannungsunterbrechung kann die (absolute) Rotorlage (bezogen auf die Umdrehung der elektrischen Maschine) erfasst werden.

Die Transformationsvorschrift ist insbesondere eine Abbildung von einer Zahnstangen- oder Hubstangenposition, die mittels des ersten Sensors bestimmt wurde, auf eine Zahnstangen- oder Hubstangenposition, die mittels des zweiten Sensors und dem virtuellen Umdrehungszähler bestimmt wurde. Insbesondere erlaubt die Transformationsvorschrift eine Umrechnung der Zahnstangen- oder Hubstangenposition auf die Rotorlage und einen Wert des virtuellen Umdrehungszählers: $x = c 1 x U + c 2 x phi$ wobei x die Zahnstangenposition, U eine Anzahl der Umdrehungen des virtuellen Umdrehungszählers und phi (0 bis 360°) eine Rotorlage bezeichnen. Die Koeffizienten c1 und c2 definieren hierbei die Abbildung und sind abhängig von der kinematischen Verbindung zwischen der Zahnstange und dem Rotor der elektrischen Maschine. Es kann vorgesehen sein, dass ein weiterer Koeffizient c3 vorgesehen ist, der insbesondere einen Offset des zweiten Sensors zu einem gewünschten Bezugskoordinatensystem berücksichtigt. (x = c1 x U + c2 x phi + c3). Die Koeffizienten werden insbesondere im Rahmen einer nachfolgend beschriebenen Kalibrierung bestimmt (zweiter Kalibrierungszustand). Alternativ kann auch vorgesehen sein, einen Gesamtwinkel (= 360° x U + phi) des zweiten Sensors zu bestimmen und diesen bestimmten Gesamtwinkel auf einen Winkel des ersten Sensors und/oder eine Zahnstangenposition umzurechnen, also beispielsweise $x = \left(c1 x U+phi\right) x c 2 + c 3$ wobei x die Zahnstangenposition, c1 ein Faktor für den virtuellen Umdrehungszähler ist (z.B. = 360° für jede volle Umdrehung), c2 ein Übersetzungsfaktor der kinematischen Kette von Riementrieb, Kugelgewindetrieb und dem ersten Sensor zu der Zahnstangenposition x. c3 ist ein Offset des ersten Sensors zu einem gewünschten Bezugssystem. Die Koeffizienten werden insbesondere im Rahmen einer nachfolgend beschriebenen Kalibrierung bestimmt (zweiter Kalibrierungszustand).

Teile des Steer-by-Wire-Lenksystems, insbesondere die Steuereinrichtung, können einzeln oder zusammengefasst als eine Kombination von Hardware und Software ausgebildet sein, beispielsweise als Programmcode, der auf einer Recheneinrichtung, insbesondere einem Mikrocontroller oder Mikroprozessor, ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) und/oder Graphikprozessor (GPU) und/oder Digitaler Signalprozessor (DSP) ausgebildet sind. Die Steuereinrichtung kann insbesondere mindestens eine Recheneinrichtung und mindestens einen Speicher umfassen.

In einer Ausführungsform ist vorgesehen, dass die Steuereinrichtung ferner dazu eingerichtet ist, in einem ersten Kalibrierungszustand einen Wert des virtuellen Umdrehungszählers basierend auf einer von dem ersten Sensor bereitgestellten Zahnstangen- oder Hubstangenposition und der erfassten Rotorlage zu bestimmen. Hierdurch kann bei Verlust eines Wertes des virtuellen Umdrehungszählers dieser Wert erneut bestimmt werden. Dies kann beispielsweise erfolgen, wenn der virtuelle Umdrehungszähler seinen Wert bei einem Aufstart und/oder aufgrund einer Spannungsunterbrechung oder sonstigen Fehlers verloren hat. Hierzu kann beispielsweise die voranstehend beispielhaft gegebene Transformationsvorschrift verwendet und entsprechend umgeformt werden: $U = \left(x-c2 x phi\right) / c 1$ bzw. für die Alternative (ohne c3): $U = \left(\left(x/c2\right)-phi\right) / c 1$

Erfasst der erste Sensor beispielsweise einen Winkel (in dieser Offenbarung nachfolgend auch als psi bezeichnet), so kann die voranstehende Gleichung auch derart umformuliert werden, dass dieser Winkel direkt berücksichtigt wird, ohne dass eine Umrechnung auf die Zahnstangen- oder Hubstangenposition x erfolgt. Hierzu wird x insbesondere entsprechend der jeweiligen Umrechnungsvorschrift von psi nach x ersetzt.

In einer Ausführungsform ist vorgesehen, dass die Steuereinrichtung dazu eingerichtet ist, in einem zweiten Kalibrierungszustand die elektrische Maschine derart anzusteuern, dass Endanschläge der Zahnstange oder Hubstange angefahren werden, wobei die Transformationsvorschrift ausgehend von einer jeweils bei den Endanschlägen mittels des ersten Sensors erfassten Zahnstangen- oder Hubstangenposition und jeweils mittels des zweiten Sensors erfassten Rotorlagen und Werten des virtuellen Umdrehungszählers bestimmt wird. Hierdurch kann die Transformationsvorschrift selbst (erneut) bestimmt werden. Insbesondere können die Koeffizienten c1 und c2 im vorgenannten Beispiel der Transformationsvorschrift bestimmt werden. Insbesondere wird erst einer der Endanschläge (z.B. links) angefahren. Dort wird mittels des ersten Sensors die Zahnstangen- oder Hubstangenposition erfasst. Ferner wird dort eine Rotorlage der elektrischen Maschine mittels des zweiten Sensors erfasst. Der virtuelle Umdrehungszähler wird beispielsweise auf Null gesetzt. Anschließend wird der andere Endanschlag (z.B. rechts) angefahren. Beim Anfahren des anderen Endanschlags wird der virtuelle Umdrehungszähler bereits bei jeder vollen Umdrehung des Rotors der elektrischen Maschine hochgezählt. Beim anderen Endanschlag angelangt, wird dort mittels des ersten Sensors die Zahnstangen- oder Hubstangenposition erfasst. Ferner wird dort mittels des zweiten Sensors die Rotorlage erfasst. Ausgehend von den bei den Endanschlägen erfassten Werten und den Werten des virtuellen Umdrehungszählers kann die Transformationsvorschrift bestimmt werden. Im vorgenannten Beispiel werden hierbei insbesondere anhand von einem Gleichungssystem mit je einer Gleichung für die mit den Endanschlägen korrespondierenden Werte die Koeffizienten c1 und c2 bestimmt. Anschließend kann die Transformationsvorschrift zum Umrechnen bereitgestellt werden und wird hierzu insbesondere in einem Speicher der Steuereinrichtung hinterlegt.

In einer Ausführungsform ist vorgesehen, dass die Steuereinrichtung ferner dazu eingerichtet ist, die elektrische Maschine während des ersten Kalibrierungszustands und/oder während des zweiten Kalibrierungszustands mit einem gegenüber dem normalen Betriebszustand reduzierten Drehmoment und/oder einem gegenüber dem normalen Betriebszustand reduzierten Motorstrom zu betreiben. Hierdurch kann das Anfahren der Endanschläge für die Mechanik und die elektrische Maschine schonender ausgestaltet werden.

In einer Ausführungsform ist vorgesehen, dass eine Verbindung von der elektrischen Maschine zu einem die Zahnstange oder Hubstange bewegenden Lenkgetriebe über einen Zahnriemen ausgebildet ist, wobei die Steuereinrichtung ferner dazu eingerichtet ist, basierend auf der erfassten Zahnstangen- oder Hubstangenposition, der erfassten Rotorlage und einem Wert des virtuellen Umdrehungszählers und der Transformationsvorschrift das Vorliegen eines Riemensprungs zu überprüfen und/oder einen Riemensprung zu erkennen. Hierdurch lässt sich auf das Auftreten eines Riemensprungs reagieren. Beispielsweise kann vorgesehen sein, hierzu einen von dem ersten Sensor erfassten Wert der Zahnstangen- oder Hubstangenposition mit einem ausgehend von einer mittels des zweiten Sensors erfassten Rotorlage und einem Wert des virtuellen Umdrehungszählers bestimmten Zahnstangen- oder Hubstangenposition zu vergleichen. Beispielsweise kann eine Differenz der auf diese beiden Weisen erhaltenen Zahnstangen- oder Hubstangenpositionen bestimmt werden und mit einem vorgegebenen Schwellwert verglichen werden. Wird der vorgegebene Schwellwert überschritten, so wird ein Riemensprung festgestellt, anderenfalls nicht. Es kann vorgesehen sein, dass nach Feststellen eines Riemensprungs eine Fehlermeldung erzeugt und ausgegeben wird. Es kann ferner alternativ oder zusätzlich vorgesehen sein, dass nach Feststellen eines Riemensprungs der voranstehend beschriebene zweite Kalibrierungszustand aktiviert wird, um die Transformationsvorschrift erneut zu bestimmen.

In einer weiterbildenden Ausführungsform ist vorgesehen, dass die Steuereinrichtung ferner dazu eingerichtet ist, beim Überprüfen und/oder Erkennen des Riemensprungs einen lastabhängigen Toleranzbereich zu berücksichtigen. Je nach anliegender Motorleistung der elektrischen Maschine kommt es zu mechanischen Dehnungen zwischen dem ersten Sensor und dem zweiten Sensor (hook'sche Dehnung, elastisch und reversibel), diese können in einem Lenkgetriebe bestimmt werden und je nach Motormoment berücksichtigt werden. Bei größeren Motorströmen bzw. Motormomenten sind die erlaubten Differenzen zwischen dem ersten Sensor und dem zweiten Sensor größer. Bei kleinerem bzw. keinem Motormoment sind die zu erwartenden Abweichungen der beiden Sensoren geringer. Die Vorteile sind eine erhöhte Robustheit gegen Fehlerkennungen von Riemensprüngen und/oder eine größere Sensitivität bei der Auslegung der Schwellwerts zur Erkennung eines Riemensprungs.

In einer Ausführungsform ist vorgesehen, dass die elektrische Maschine und der zweite Sensor redundant ausgeführt sind, wobei die Rotorlage ausgehend von gemittelten Werten des redundanten zweiten Sensors bestimmt wird. Hierdurch kann auch bei einer redundant ausgeführten elektrischen Maschine eine Rotorlage erfasst bzw. bestimmt werden. Es kann beispielsweise vorgesehen sein, dass die elektrische Maschine zwei Rotoren aufweist, welche beispielsweise eine gemeinsame Welle jeweils einzeln oder gemeinsam antreiben können. Jede der elektrischen Maschinen weist einen eigenen Ansteuerpfad mit einem eigenen Steuergerät (ECU) auf. Für jeden dieser Pfade können beispielsweise jeweils zwei zweite Sensoren vorgesehen sein (d.h. je zwei zweite Sensoren pro Pfad), die jeweils eine Rotorlage der jeweiligen elektrischen Maschine bereitstellen. Insgesamt können daher vier Werte für die Rotorlage berücksichtigt werden. Diese vier Werte werden gemittelt und verfahrensgemäß als gemittelter Wert für die Rotorlage berücksichtigt.

Darüber hinaus wird auch ein Fahrzeug geschaffen, umfassend ein Steer-by-Wire-Lenksystem nach einer der in dieser Offenbarung beschriebenen Ausführungsformen. Das Fahrzeug ist insbesondere ein Kraftfahrzeug.

Weitere Merkmale zur Ausgestaltung des Verfahrens ergeben sich aus der Beschreibung von Ausgestaltungen des Steer-by-Wire-Lenksystems. Die Vorteile des Verfahrens sind hierbei jeweils die gleichen wie bei den Ausgestaltungen des Steer-by-Wire-Lenksystems.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Steer-by-Wire-Lenksystems;
- Fig. 2: eine schematische Darstellung zur Verdeutlichung der kinematischen Zusammenhänge in dem Steer-by-Wire-Lenksystem;
- Fig. 3: ein schematisches Ablaufdiagramm zur Verdeutlichung einer Ausführungsform des Verfahrens zum Betreiben eines Steer-by-Wire-Lenksystems;
- Fig. 4: ein schematisches Ablaufdiagramm zur Verdeutlichung einer Ausführungsform des Verfahrens;
- Fig. 5: ein schematisches Ablaufdiagramm zur Verdeutlichung einer Ausführungsform des Verfahrens.

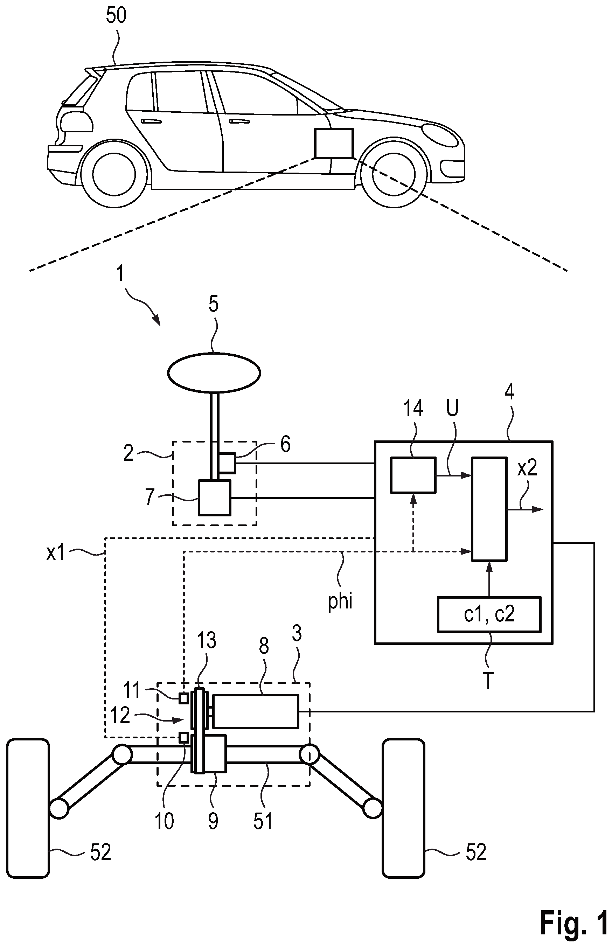

Die Fig. 1 zeigt eine schematische Darstellung einer Ausführungsform des Steer-by-Wire-Lenksystems 1. Das Steer-by-Wire-Lenksystem 1 umfasst ein Lenkradmodul 2 (engl. FFA), ein Lenkmodul 3 (engl. RWA) und eine Steuereinrichtung 4. Das Lenkradmodul 2 ist dazu eingerichtet, eine Lenkvorgabe an einem Lenkrad 5 zu erfassen und eine haptische Rückmeldung an das Lenkrad 5 zu geben. Hierfür weist das Lenkradmodul 2 beispielsweise einen Lenkradwinkelsensor 6 und einen Aktuator 7 auf. Das Lenkmodul 3 weist eine elektrische Maschine 8 zum Bereitstellen eines Lenkmoments auf, mit dem eine Zahnstangenposition (alternativ eine Hubstangenposition) einer Zahnstange 51 (bzw. einer Hubstange oder Schubstange) gestellt werden kann. Das Lenkmoment führt dazu, dass an lenkbaren Rädern 52 eines Fahrzeugs 50 ein Lenkwinkel gestellt wird. Ferner weist das Lenkmodul 3 ein achsparalleles Lenkgetriebe 9, insbesondere ein Kugelgewindetrieb, einen ersten Sensor 10 und einen zweiten Sensor 11 auf. Ein Rotor 12 der elektrischen Maschine 8 ist über einen Zahnriemen 13 mit dem Lenkgetriebe 9 verbunden.

Der erste Sensor 10 ist dazu eingerichtet, die Zahnstangenposition x1 über einen gesamten Lenkungshub zu erfassen. Hierzu ist der erste Sensor 10 insbesondere an dem Lenkgetriebe 9 angeordnet und/oder mit diesem verbunden.

Der zweite Sensor 11 ist dazu eingerichtet, eine Rotorlage phi des Rotors 12 der elektrischen Maschine 8 zu erfassen. Hierzu ist der zweite Sensor 11 insbesondere an dem Rotor 12 angeordnet. Der zweite Sensor 11 kann beispielsweise als Inkrementalgeber ausgebildet sein.

Die Steuereinrichtung 4 umfasst beispielsweise eine Recheneinrichtung (nicht gezeigt) und einen Speicher (nicht gezeigt). Die Steuereinrichtung 4 ist dazu eingerichtet, basierend auf der von dem zweiten Sensor 11 bereitgestellten Rotorlage phi einen virtuellen Umdrehungszähler 14 für den Rotor 12 bereitzustellen und in einem normalen Betriebszustand eine Zahnstangenposition x2 (bzw. Hubstangenposition) basierend auf der bereitgestellten Rotorlage phi und einem Wert U des virtuellen Umdrehungszählers 14 und einer Transformationsvorschrift T zu bestimmen.

Die Steuereinrichtung 4 ist ferner insbesondere dazu eingerichtet, die elektrische Maschine 8 basierend auf der bestimmten Zahnstangenposition x2 zu steuern und/oder zu regeln.

Es kann vorgesehen sein, dass die Steuereinrichtung 4 ferner dazu eingerichtet ist, in einem ersten Kalibrierungszustand einen Wert U des virtuellen Umdrehungszählers 14 basierend auf einer von dem ersten Sensor 10 bereitgestellten Zahnstangenposition x1 und der Rotorlage phi zu bestimmen. Insbesondere wird hierbei die Transformationsvorschrift T berücksichtigt.

Es kann vorgesehen sein, dass die Steuereinrichtung 4 dazu eingerichtet ist, in einem zweiten Kalibrierungszustand die elektrische Maschine 8 derart anzusteuern, dass Endanschläge der Zahnstange 51 (bzw. Hubstange) angefahren werden, wobei die Transformationsvorschrift T ausgehend von einer jeweils bei den Endanschlägen mittels des ersten Sensors 10 erfassten Zahnstangenposition x1 (bzw. Hubstangenposition) und jeweils mittels des zweiten Sensors 11 erfassten Rotorlagen phi und Werten U des virtuellen Umdrehungszählers 14 bestimmt wird. Das Vorgehen hierzu wurde voranstehend bereits beispielhaft in der allgemeinen Beschreibung beschrieben.

Es kann weiterbildend vorgesehen sein, dass die Steuereinrichtung 4 ferner dazu eingerichtet ist, die elektrische Maschine 8 während des ersten Kalibrierungszustands und/oder während des zweiten Kalibrierungszustands mit einem gegenüber dem normalen Betriebszustand reduzierten Drehmoment und/oder einem gegenüber dem normalen Betriebszustand reduzierten Motorstrom zu betreiben.

Es ist insbesondere vorgesehen, dass eine Verbindung von der elektrischen Maschine 8 zu einem die Zahnstange 51 (bzw. Hubstange) bewegenden Lenkgetriebe 9 über einen Zahnriemen 13 ausgebildet ist, wobei die Steuereinrichtung 4 ferner dazu eingerichtet ist, basierend auf der erfassten Zahnstangenposition x1 (bzw. Hubstangenposition), der erfassten Rotorlage phi und einem Wert U des virtuellen Umdrehungszählers 14 und der Transformationsvorschrift T das Vorliegen eines Riemensprungs zu überprüfen und/oder einen Riemensprung zu erkennen. Das Vorgehen hierbei wurde voranstehend bereits beispielshaft beschrieben.

Es kann weiterbildend vorgesehen sein, dass die Steuereinrichtung 4 ferner dazu eingerichtet ist, beim Überprüfen und/oder Erkennen des Riemensprungs einen lastabhängigen Toleranzbereich zu berücksichtigen.

Es kann vorgesehen sein, dass die elektrische Maschine 8 und der zweite Sensor 11 redundant ausgeführt sind, wobei die Rotorlage phi ausgehend von gemittelten Werten des redundanten zweiten Sensors 11 bestimmt wird.

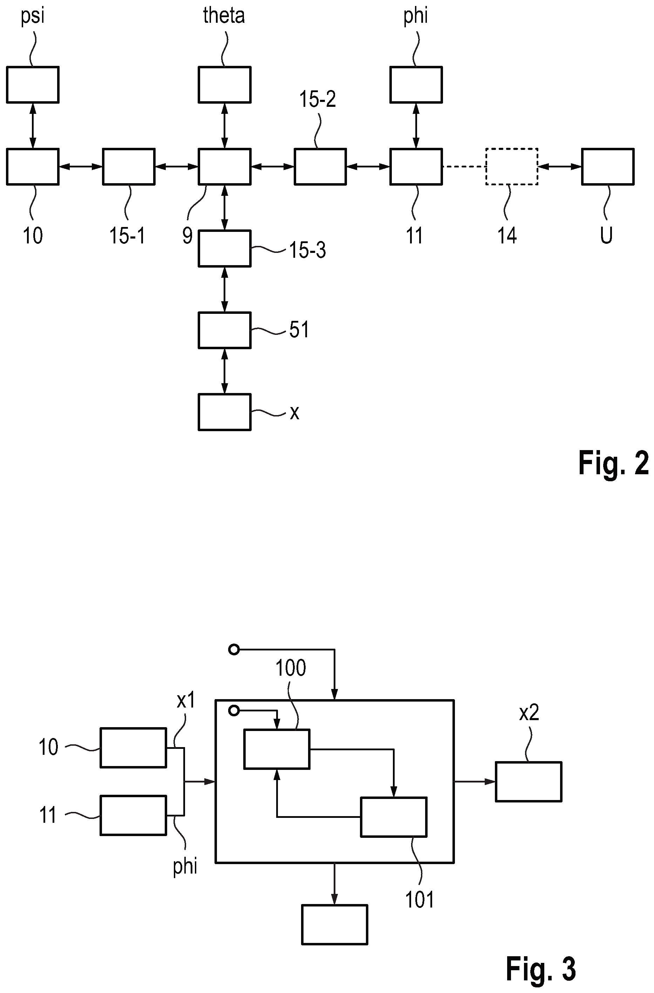

Die Fig. 2 zeigt eine schematische Darstellung zur Verdeutlichung der kinematischen Zusammenhänge in dem Steer-by-Wire-Lenksystem. Gezeigt sind der erste Sensor 10, der zweite Sensor 11, das Lenkgetriebe 9 und die Zahnstange 51 sowie der virtuelle Umdrehungszähler 14. Der erste Sensor 10, der zweite Sensor 11 und die Zahnstange 51 sind über das Lenkgetriebe 9 miteinander verbunden. Hierbei sind zwischen diesen jeweils kinematische Verbindungen 15-x ausgebildet, welche mit einem jeweiligen Übersetzungsverhältnis einhergehen.

Der erste Sensor 10 erfasst beispielsweise einen Winkel psi, wobei sich ein abgedeckter Winkelbereich über den gesamten Lenkungshub erstreckt. Über die kinematischen Verbindungen 15-1, 15-3 lässt sich ausgehend von dem erfassten Winkel psi die Zahnstangenposition x1 (als Schätzwert für die reale Zahnstangenposition x) erfassen bzw. bestimmen, indem der erfasste Winkel psi in die Zahnstangenposition x1 umgerechnet wird.

Der zweite Sensor 11 erfasst eine Rotorlage phi, welche insbesondere eine Winkelposition des Rotors repräsentiert. Zusammen mit dem virtuellen Umdrehungszähler 14, der eine Anzahl U von Umdrehungen erfasst und bereitstellt, kann ausgehend von der Rotorlage phi und dem Wert U des Umdrehungszählers 14 über die kinematischen Verbindungen 15-2, 15-3 eine Zahnstangenposition x2 (als Schätzwert für die reale Zahnstangenposition x) bestimmt werden. Die hierbei berücksichtigten kinematischen Verbindungen 15-2, 15-3 sind insbesondere diejenigen, die in der Transformationsvorschrift berücksichtigt werden, die in der allgemeinen Beschreibung beispielhaft angegeben ist.

Ferner können auch die jeweils erfassten Werte für psi und phi mit U ineinander umgerechnet werden, indem die kinematischen Verbindungen 15-1 und 15-2 berücksichtigt werden.

Grundsätzlich lässt sich ausgehend von psi oder phi und U auch ein virtueller Winkel theta des Lenkgetriebes 9 bestimmen, wobei hierzu die kinematischen Verbindungen 15-1 oder 15-2 berücksichtigt werden.

Die Fig. 3 zeigt ein schematisches Ablaufdiagramm zur Verdeutlichung einer Ausführungsform des Verfahrens zum Betreiben eines Steer-by-Wire-Lenksystems. Grundsätzlich wird in einem normalen Betriebszustand 100 die Zahnstangenposition x2 (als Schätzwert für die reale Zahnstangenposition x) ausgehend von der mittels des zweiten Sensors 11 erfassten Rotorlage und einem Wert des virtuellen Umdrehungszählers bestimmt.

Bei Auftreten eines Fehlers, beispielsweise, wenn der Umdrehungszähler aufgrund einer Spannungsunterbrechung seinen Wert verloren hat, wird in einen ersten Kalibrierungszustand 101 gewechselt. In diesem ersten Kalibrierungszustand 101 ist vorgesehen, dass ein Wert des virtuellen Umdrehungszählers basierend auf einer von dem ersten Sensor 10 bereitgestellten Zahnstangen- oder Hubstangenposition x1 und der erfassten Rotorlage phi und insbesondere der Transformationsvorschrift bestimmt wird. Ist das Kalibrieren abgeschlossen, so wird in den normalen Betriebszustand 100 zurückgewechselt.

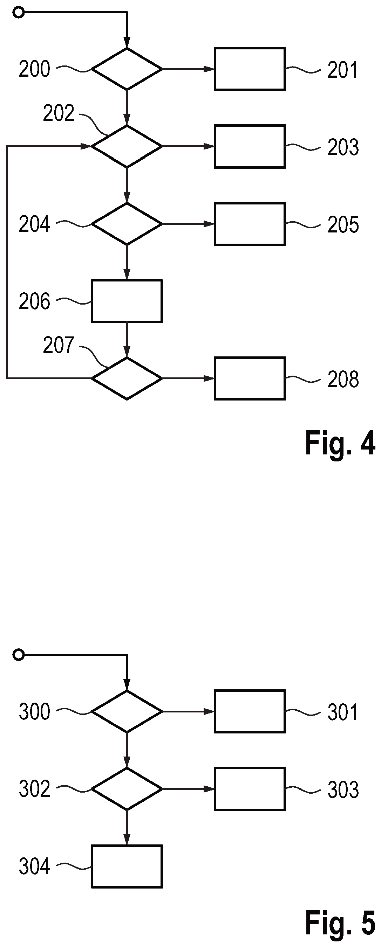

Die Fig. 4 zeigt ein schematisches Ablaufdiagramm zur Verdeutlichung einer Ausführungsform des Verfahrens. Nach dem Start des Verfahrens wird in einem ersten Verfahrensschritt 200 überprüft, ob das Steer-by-Wire-Lenksystem kalibriert ist. Insbesondere wird hierbei überprüft, ob die Transformationsvorschrift (insbesondere Werte für die Koeffizienten c1 und c2) vorliegt oder nicht. Ist dies nicht der Fall, so wird in einem Verfahrensschritt 201 eine Fehlermeldung ausgegeben mit dem Inhalt, dass eine Kalibrierung notwendig ist. Es kann vorgesehen sein, dass automatisiert der zweite Kalibrierungszustand aktiviert wird, um die Transformationsvorschrift zu bestimmen.

Ist dies hingegen der Fall, so wird mit Verfahrensschritt 202 fortgefahren. Im Verfahrensschritt 202 wird eine Funktionsweise des ersten Sensors überprüft. Beispielsweise kann überprüft werden, ob ein Fehlerbit für den ersten Sensor gesetzt ist oder nicht. Funktioniert der erste Sensor nicht ordnungsgemäß, so wird in einem Verfahrensschritt 203 eine Fehlermeldung ausgegeben mit dem Inhalt, dass der erste Sensor fehlerhaft arbeitet.

Wird in Verfahrensschritt 202 hingegen festgestellt, dass der erste Sensor ordnungsgemäß arbeitet, so wird mit Verfahrensschritt 204 fortgefahren. In Verfahrensschritt 204 wird eine Funktionsweise des zweiten Sensors überprüft. Beispielsweise kann überprüft werden, ob ein Fehlerbit für den zweiten Sensor gesetzt ist oder nicht. Funktioniert der zweite Sensor nicht ordnungsgemäß, so wird in einem Verfahrensschritt 205 eine Fehlermeldung ausgegeben mit dem Inhalt, dass der zweite Sensor fehlerhaft arbeitet.

Wird in Verfahrensschritt 204 hingegen festgestellt, dass der zweite Sensor ordnungsgemäß arbeitet, so wird mit Verfahrensschritt 206 fortgefahren. In Verfahrensschritt 206 wird in der bereits beschriebenen Weise aus der mittels des zweiten Sensors erfassten Rotorlage und dem Wert des virtuellen Umdrehungszählers die Zahnstangenposition (bzw. Hubstangenposition) bestimmt. Der bestimmte Wert der Zahnstangenposition wird anschließend insbesondere zum Steuern und/oder Regeln der elektrischen Maschine verwendet.

In einem Verfahrensschritt 207 wird überprüft, ob das Fahrzeug und/oder das Steer-by-Wire-Lenksystem ausgeschaltet werden soll. Ist dies der Fall, so wird in einem Verfahrensschritt 208 ein Zustand des Steer-by-Wire-Lenksystems gespeichert. Insbesondere wird hierzu ein Wert der bestimmten Zahnstangenposition (bzw. Hubstangenposition) bzw. ein Wert des Umdrehungszählers in einem nichtflüchtigen Speicher, insbesondere der Steuereinrichtung, hinterlegt. Bei einem anschließenden Aufstart, kann sofort mit dem hinterlegten Wert weitergearbeitet werden, in dem dieser aus dem Speicher abgerufen wird.

Soll das Steer-by-Wire-Lenksystem hingegen weiterbetrieben werden, so wird erneut zu Verfahrensschritt 202 gesprungen und die Verfahrensschritte 202 bis 208 werden wiederholt.

Die Fig. 5 zeigt ein schematisches Ablaufdiagramm zur Verdeutlichung einer Ausführungsform des Verfahrens. Der gezeigte Teil des Verfahrens verdeutlicht eine Ausführungsform des zweiten Kalibrierungszustands. In einem Verfahrensschritt 300 wird eine Funktionsweise des ersten Sensors überprüft. Beispielsweise kann überprüft werden, ob ein Fehlerbit für den ersten Sensor gesetzt ist oder nicht. Funktioniert der erste Sensor nicht ordnungsgemäß, so wird in einem Verfahrensschritt 301 eine Fehlermeldung ausgegeben mit dem Inhalt, dass der erste Sensor fehlerhaft arbeitet.

Wird in Verfahrensschritt 300 hingegen festgestellt, dass der erste Sensor ordnungsgemäß arbeitet, so wird mit Verfahrensschritt 302 fortgefahren. In Verfahrensschritt 302 wird eine Funktionsweise des zweiten Sensors überprüft. Beispielsweise kann überprüft werden, ob ein Fehlerbit für den zweiten Sensor gesetzt ist oder nicht. Funktioniert der zweite Sensor nicht ordnungsgemäß, so wird in einem Verfahrensschritt 303 eine Fehlermeldung ausgegeben mit dem Inhalt, dass der zweite Sensor fehlerhaft arbeitet.

Wird in Verfahrensschritt 302 hingegen festgestellt, dass der zweite Sensor ordnungsgemäß arbeitet, so wird mit Verfahrensschritt 304 fortgefahren. Im Verfahrensschritt 304 werden nacheinander Endanschläge der Zahnstange oder Hubstange angefahren, wobei die Transformationsvorschrift ausgehend von einer jeweils bei den Endanschlägen mittels des ersten Sensors erfassten Zahnstangen- oder Hubstangenposition und jeweils mittels des zweiten Sensors erfassten Rotorlagen und Werten des virtuellen Umdrehungszählers bestimmt wird. Die jeweiligen Werte werden gespeichert. Mittels der Steuereinrichtung wird die Transformationsvorschrift bestimmt. Ein Beispiel hierzu wurde bereits in der allgemeinen Beschreibung gegeben. Die bestimmte Transformationsvorschrift, insbesondere Koeffizienten der Transformationsvorschrift, werden in einem Speicher der Steuereinrichtung hinterlegt.

### Bezugszeichenliste

- 1: Steer-by-Wire-Lenksystem
- 2: Lenkradmodul
- 3: Lenkmodul
- 4: Steuereinrichtung
- 5: Lenkrad
- 6: Lenkradwinkelsensor
- 7: Aktuator
- 8: elektrische Maschine
- 9: achsparalleles Lenkgetriebe
- 10: erster Sensor
- 11: zweiter Sensor
- 12: Rotor
- 13: Zahnriemen
- 14: virtueller Umdrehungszähler
- 15-x: kinematische Verbindung
- 50: Fahrzeug
- 51: Zahnstange (bzw. Hubstange)
- 52: lenkbares Rad
- 100: normaler Betriebszustand
- 101: erster Kalibrierungszustand
- 200-208: Verfahrensschritte
- 300-304: Verfahrensschritte
- phi: erfasste Rotorlage
- psi: Winkel (erster Sensor)
- T: Transformationsvorschrift
- theta: virtueller Winkel des Lenkgetriebes
- U: Wert des virtuellen Umdrehungszählers
- x: reale Zahnstangenposition
- x1: erfasste Zahnstangenposition (erster Sensor)
- x2: bestimmt Zahnstangenposition (zweiter Sensor)

## Patentansprüche

1. Steer-by-Wire-Lenksystem (1), umfassend:
ein achsparalleles Lenkgetriebe (9),
eine elektrische Maschine (8), die eingerichtet ist zum Stellen einer Zahnstangen- oder Hubstangenposition (x) über das achsparallele Lenkgetriebe (9),
einen ersten Sensor (10), der eingerichtet ist zum Erfassen der Zahnstangen- oder Hubstangenposition (x1) über einen gesamten Lenkungshub,
einen zweiten Sensor (11), der eingerichtet ist zum Erfassen einer Rotorlage (phi) eines Rotors (12) der elektrischen Maschine (8), und
eine Steuereinrichtung (4), wobei die Steuereinrichtung (4) dazu eingerichtet ist, basierend auf der von dem zweiten Sensor (11) bereitgestellten Rotorlage (phi) einen virtuellen Umdrehungszähler (14) für den Rotor (12) bereitzustellen und in einem normalen Betriebszustand (100) eine Zahnstangen- oder Hubstangenposition (x2) basierend auf der bereitgestellten Rotorlage (phi) und einem Wert (U) des virtuellen Umdrehungszählers (14) und einer Transformationsvorschrift (T) zu bestimmen.

2. Steer-by-Wire-Lenksystem (1) nach Anspruch 1, **dadurch gekennzeichnet, dass** die Steuereinrichtung (4) ferner dazu eingerichtet ist, in einem ersten Kalibrierungszustand (101) einen Wert (U) des virtuellen Umdrehungszählers (14) basierend auf einer von dem ersten Sensor (10) bereitgestellten Zahnstangen- oder Hubstangenposition (x1) und der erfassten Rotorlage (phi) zu bestimmen.

3. Steer-by-Wire-Lenksystem (1) nach Anspruch 1 oder 2, **dadurch gekennzeichnet, dass** die Steuereinrichtung (4) dazu eingerichtet ist, in einem zweiten Kalibrierungszustand die elektrische Maschine (8) derart anzusteuern, dass Endanschläge der Zahnstange (51) oder Hubstange angefahren werden, wobei die Transformationsvorschrift (T) ausgehend von einer jeweils bei den Endanschlägen mittels des ersten Sensors (10) erfassten Zahnstangen- oder Hubstangenposition (x1) und jeweils mittels des zweiten Sensors (11) erfassten Rotorlagen (phi) und Werten (U) des virtuellen Umdrehungszählers (14) bestimmt wird.

4. Steer-by-Wire-Lenksystem (1) nach Anspruch 3, **dadurch gekennzeichnet, dass** die Steuereinrichtung (4) ferner dazu eingerichtet ist, die elektrische Maschine (8) während des ersten Kalibrierungszustands und/oder während des zweiten Kalibrierungszustands mit einem gegenüber dem normalen Betriebszustand (100) reduzierten Drehmoment und/oder einem gegenüber dem normalen Betriebszustand (100) reduzierten Motorstrom zu betreiben.

5. Steer-by-Wire-Lenksystem (1) nach einem der vorangegangenen Ansprüche, **dadurch gekennzeichnet, dass** eine Verbindung von der elektrischen Maschine (8) zu einem die Zahnstange (51) oder Hubstange bewegenden Lenkgetriebe (9) über einen Zahnriemen (13) ausgebildet ist, wobei die Steuereinrichtung (4) ferner dazu eingerichtet ist, basierend auf der erfassten Zahnstangen- oder Hubstangenposition (x1), der erfassten Rotorlage (phi) und einem Wert (U) des virtuellen Umdrehungszählers (14) und der Transformationsvorschrift (T) das Vorliegen eines Riemensprungs zu überprüfen und/oder einen Riemensprung zu erkennen.

6. Steer-by-Wire-Lenksystem (1) nach Anspruch 5, **dadurch gekennzeichnet, dass** die Steuereinrichtung (4) ferner dazu eingerichtet ist, beim Überprüfen und/oder Erkennen des Riemensprungs einen lastabhängigen Toleranzbereich zu berücksichtigen.

7. Steer-by-Wire-Lenksystem (1) nach einem der vorangegangenen Ansprüche, **dadurch gekennzeichnet, dass** die elektrische Maschine (8) und der zweite Sensor (11) redundant ausgeführt sind, wobei die Rotorlage (phi) ausgehend von gemittelten Werten des redundanten zweiten Sensors (11) bestimmt wird.

8. Fahrzeug (50), umfassend ein Steer-by-Wire-Lenksystem (1) nach einem der vorangegangenen Ansprüche.

9. Verfahren zum Betreiben eines Steer-by-Wire-Lenksystems (1),
wobei eine Zahnstangen- oder Hubstangenposition (x) über ein achsparalleles Lenkgetriebe (9) mittels einer elektrischen Maschine (8) gestellt wird,
wobei die Zahnstangen- oder Hubstangenposition (x1) mittels eines ersten Sensors (10) über einen gesamten Lenkungshub erfasst wird,
wobei eine Rotorlage (phi) eines Rotors (12) der elektrischen Maschine (8) mittels eines zweiten Sensors (11) erfasst wird,
wobei basierend auf der von dem zweiten Sensor(11) erfassten Rotorlage (phi) ein virtueller Umdrehungszähler (14) für den Rotor (12) bereitgestellt wird, und
wobei eine Zahnstangen- oder Hubstangenposition (x2) in einem normalen Betriebszustand (100) basierend auf der erfassten Rotorlage (phi) und einem Wert (U) des virtuellen Umdrehungszählers (14) und einer Transformationsvorschrift (T) bestimmt wird.
